# EUROPEAN PATENT SPECIFICATION

(11) **EP 1 952 463 B1**
(45) Date of publication and mention of the grant of the patent: **30.04.2014**
(21) Application number: 06812247.2
(22) Date of filing: 27.10.2006
(51) Int. Cl.: H01M 4/02, H01M 4/62, H01M 10/0525, H01M 4/133, H01M 4/134, H01M 4/139, H01M 4/36, H01M 4/38, H01M 4/587

(54) **HIGH-CAPACITY ELECTRODE ACTIVE MATERIAL FOR SECONDARY BATTERY**
ELEKTRODEN-AKTIVMATERIAL HOHER KAPAZITÄT FÜR EINE SEKUNDÄRBATTERIE
MATERIAU ACTIF D'ELECTRODE A HAUT RENDEMENT POUR CELLULE SECONDAIRE

(30) Priority: 27.10.2005 KR 20050101813
(43) Date of publication of application: 06.08.2008
(73) Proprietor: LG Chem, Ltd., Seoul 150-721 (KR)
(72) Inventor: KWON, Ou-Jung, Daejeon 305-380 (KR); LEE, Yong-Ju, Deajeon 301-212 (KR); CHANG, Won-Seok, Cheongwon-gun Chungcheongbuk-do 363-883 (KR); KIM, Ki-Tae, Daejeon 305-390 (KR); LEE, Seo-Jae, Daejeon 305-509 (KR); LEE, Ki-Young, Daejeon 305-350 (KR)
(74) Representative: HOFFMANN EITLE
(86) International application number: PCT/KR2006/004406
(87) International publication number: WO 2007/049931

(56) References cited:
- EP-A2- 1 102 339
- EP-A2- 1 205 989
- WO-A1-2004/114439
- US-A- 5 702 845
- US-A1- 2002 164 479
- US-B1- 6 395 423
- US-B1- 6 558 438

## Description

### Technical Field

The present invention relates to an electrode active material for a secondary battery, and a secondary battery comprising the same electrode active material.

### Background Art

In general, a lithium secondary battery is obtained by using materials capable of lithium ion intercalation/deintercalation as a cathode and an anode, and by injecting an organic electrolyte or a polymer electrolyte between the cathode and the anode. Such a lithium secondary battery generates electric energy via redox reactions induced by the lithium ion intercalation/deintercalation at the cathode and the anode.

Currently, carbonaceous materials have been used as an electrode active material forming the anode of a lithium secondary battery. However, an electrode active material having a higher capacity is still required in order to further improve the capacity of a lithium secondary battery.

To satisfy such requirement, metals that show a higher charge/discharge capacity as compared to carbonaceous materials and are capable of forming an electrochemical alloy with lithium, such as Si, Al, etc, have been used as electrode active materials. However, such metal-based electrode active materials show a severe change in volume due to lithium intercalation/deintercalation, so that they are cracked and finely divided. Therefore, secondary batteries using such metal-based electrode active materials undergo a rapid drop in capacity during repeated charge/discharge cycles and show poor cycle life characteristics.

Japanese Laid-Open Patent No. 2001-297757 discloses an electrode active material having a structure based on an a phase comprising an element capable of lithium intercalation/deintercalation (e.g. Si) and a β phase essentially comprising an intermetallic compound or a solid solution of the above element with another element b.

However, the aforementioned electrode active materials are still insufficient in providing excellent cycle life characteristics, and thus cannot be used as practical electrode active materials for a lithium secondary battery.

### Disclosure of Invention

### Technical Problem

Therefore, the present invention has been made in view of the above-mentioned problems. It is an object of the present invention to provide an electrode active material having high charge/discharge capacity and excellent cycle life characteristics, and a secondary battery comprising the same electrode active material. The electrode active material comprises particles having a core layer capable of repeating lithium intercalation/deintercalation, and an amorphous carbon layer and a crystalline carbon layer successively formed on a surface of the core layer. Such high charge/discharge capacity and excellent cycle life characteristics are accomplished by the crystalline carbon layer, which comprises sheet-like carbon layer units, each sheet-like carbon layer unit having a c-axis direction perpendicular to the tangent direction of the core layer, so as to inhibit variations in volume of the core layer, such as a metal, during repeated charge/discharge cycles, and to maintain high conductivity and conduction paths among the electrode active material particles.

### Technical Solution

An aspect of the present invention is an electrode active material comprising particles which comprise, successively, a core layer comprising at least one metal or metalloid selected from Si, Al, Sn, Sb, Bi, As, Ge, Pb and an alloy thereof, an amorphous carbon layer and a crystalline carbon layer, wherein the crystalline carbon layer comprises a plurality of sheet-like carbon layer units having a c-axis direction perpendicular to the tangent direction of the core layer.

Another aspect of the invention is a secondary battery comprising the above electrode active material

A further aspect of the invention is a method for preparing the above electrode active material, the method comprising a first step of mixing at least one core layer-forming metal or metalloid selected from Si, Al, Sn, Sb, Bi, As, Go, Pb and an alloy thereof with crystalline carbon, and a second step of carrying out mechanical alloying of the mixture obtained in the first step in a Mechano Fusion system in the presence of balls, wherein the mechanical alloying is performed at a compressive stress to sheer stress ratio of 0.5:1 or more.

The foregoing and other objects, features and advantages of the present invention will become more apparent from the following detailed description when taken in conjunction with the accompanying drawings in which:
FIG. 1 is a sectional view of the electrode active material prepared according to a preferred embodiment of the present invention;
FIG. 2 is a photographic view of the electrode active material according to Example 1, taken by TEM (transmission electron microscopy);
FIG. 3 is a photographic view of the surface of the electrode active material according to Example 2, taken by SEM before the electrode active material is subjected to charge/discharge cycles; and
FIG. 4 is a photographic view of the surface of the electrode active material according to Example 2, taken by SEM after the electrode active material is subjected to fifty charge/discharge cycles.

### Mode for the Invention

Hereinafter, the present invention will be explained in more detail.

As used herein, the term sheet-like carbon layer unit refers to a plurality of sheet-like carbon layers having the same c-axis direction in a crystalline carbon layer as the concept of a unit.

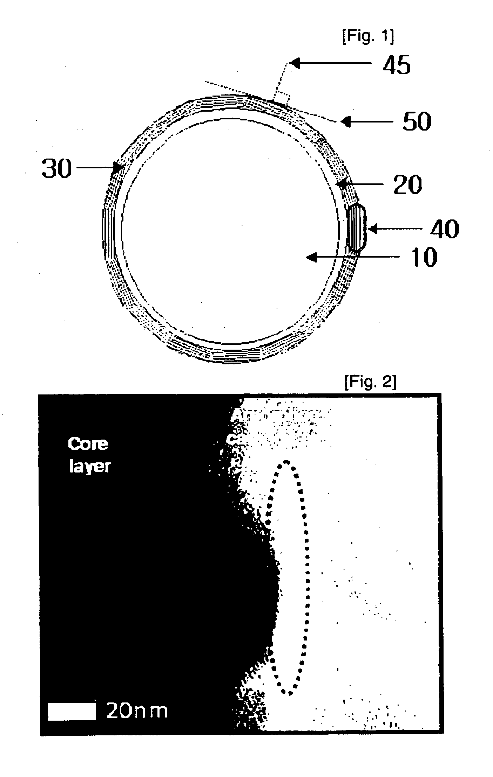

FIG. 1 is a sectional view of the electrode active material that may be prepared according to a preferred embodiment of the present invention. As shown in FIG. 1, the surface of a core layer 10 formed of an electrochemically rechargeable metal or metalloid as defined above is coated with an amorphous carbon layer 20 and a crystalline carbon layer 30, sucessively. Additionally, the crystalline carbon layer 30 comprises sheet-like carbon layer units 40. Further, the c-axis direction 45 of the sheet-like carbon layer units is perpendicular to the tangent direction of the core layer.

The sheet-like carbon layer units 40 forming the crystalline carbon layer are not arranged randomly and non-directionally but are arranged with a certain directivity. This is accomplished by the electrode active material particles that collide with each other during the preparation thereof in such a manner that the c-axis direction 45 of the sheet-like carbon layer units is perpendicular to the tangent direction of the core layer.

Because a plurality of sheet-like carbon layer units 40 having the same c-axis direction exist and the c-axis direction of the sheet-like carbon layer units is perpendicular to the tangent direction of the core layer, edge portions of each sheet-like carbon layer unit 40 are connected closely to each other. Due to such connection, each sheet-like carbon layer unit 40 has no edge portions exposed to the exterior. Thus, it is possible to inhibit formation of a coating film and generation of an irreversible reaction that may occur between an electrolyte and the edge portions of each sheet-like carbon layer unit 40 exposed to the electrolyte.

Therefore, the sheet-like carbone layer units 40 forming the crystalline carbon layer 30 can inhibit the core layer 10 from undergoing variations in volume along the radial direction from the center of the core layer during repeated lithium intercalation/deintercalation. Additionally, it is possible for the electrode active material according to the present invention to maintain electrical conductivity and conduction paths among the electrode active material particles. As a result, a lithium secondary battery using the electrode active material according to the present invention provides high charge/ discharge capacity and excellent cycle life characteristics.

Particular examples of the crystalline carbon include natural graphite, artificial graphite, etc., which have a high degree of graphitization. Particular examples of the graphite-based material include MCMB (MesoCarbon MicroBead), carbon fiber, natural graphite, or the like, but are not limited thereto.

Particular examples of the amorphous carbon include coal tar pitch, petroleum pitch, and carbonaceous materials obtained by heat treatment of various organic materials.

According to a preferred embodiment of the present invention, the core layer, the amorphous carbon layer and the crystalline carbon layer are present in a ratio of [core layer : amorphous carbon layer : crystalline carbon layer] of 90-10 parts by weight: 0.1-50 parts by weight : 9.9-90 parts by weight.

If the core layer capable of repeating lithium intercalation/deintercalation is present in an amount less than 10 parts by weight, the electrode active material cannot be served as a high-capacity electrode active material due to its low reversible capacity. If the crystalline carbon layer is present in an amount less than 9.9 parts by weight, it is not possible to obtain conductivity sufficiently. Additionally, if the amorphous carbon layer is present in an amount less than 0.1 parts by weight, it is not possible to inhibit a volume expansion sufficiently. On the other hand, if the amorphous carbon layer is present in an amount greater than 50 parts by weight, there is a possibility of degradation of capacity and conductivity.

Preferably, the amorphous carbon layer has an interlayer spacing d002 of 0.34nm or more and a thickness of 5nm or more. If the amorphous carbon layer has a thickness less than 5nm, it is not possible to sufficiently inhibit variations in volume of the core layer. If the interlayer spacing is less than 0.34nm, the amorphous carbon layer itself undergoes severe variations in volume during repeated charge/discharge cycles. Thus; it is not possible to sufficiently inhibit variations in volume of the core layer, resulting in degradation in cycle life characteristics.

Preferably, the crystalline carbon layer has an interlayer spacing d002 of 0.3354-0.35nm. The lowest critical value is the theoretical minimum interlayer spacing of graphite, and thus any value smaller than the lowest critical value does not exist. Carbon having an interlayer spacing greater than the highest critical value has poor conductivity, so that the crystalline carbon layer using the same shows low conductivity. Thus, in this case, lithium intercalation/ deintercalation cannot proceed smoothly.

Although there is no limitation in thickness of the crystalline carbon layer, the crystalline carbon layer preferably has a thickness of 1-10 µm. If the crystalline carbon layer has a thickness less than 1 µm, it is difficult to ensure sufficient conductivity among electrode active material particles. On the other hand, if the crystalline carbon layer has a thickness greater than 10 µm, the proportion of the carbonaceous materials to the electrode active material is too high to obtain high charge/discharge capacity.

The electrode active material according to the present invention can be obtained by the method described above. Herein, the term mechanical alloying" refers to a process for forming an alloy having a uniform composition by applying a mechanical force.

In the first step, the metal or metalloid may be mixed with the crystalline carbon in a ratio of [metal or metalloid: crystalline carbon] of 90-10 parts by weight: 10-90 parts by weight.

In the second step, the balls may be mixed with the mixture obtained from the first step in a ratio of [balls: mixture of the first step] of 50-98 parts by weight: 50-2 parts by weight. If the ratio is less than 50:50, it is not possible to transfer compression stress to the mixture. On the other hand, if the ratio is greater than 98 : 2, the balls are used in an excessive amount, resulting in a drop in productivity.

Additionally, the balls that may be used in the second step include stainless steel balls or zirconia balls having a diameter of 0.1-10mm.

When preparing the electrode active material in the manner as described above, two important factors affecting such arrangement that the c-axis direction of the crystalline carbone layer is perpendicular to the tangent direction of the core layer are shear stress and compressive stress.

The compressive stress has a strong tendency to improve the binding between the core layer and the crystalline carbon layer, thereby improving the cycle characteristics. The shear stress has a strong tendency to break the structure of the crystalline carbon layer, thereby increasing the itreversible capacity. Therefore, the ratio of compressive stress/shear stress during the mechanical alloying in the second step is 0.5 or more.

The electrode may be manufactured by a conventional method known to those skilled in the art. For example, the electrode active material according to the present invention may be mixed with a binder and a solvent, and optionally with a conductive agent and a dispersant, and the mixture is agitated to provide slurry. Then, the slurry is applied onto a metal collector, and the collector coated with the slurry is compressed and dried to provide an electrode.

The binder and the conductive agent may be used in an amount of 1-10 parts by weight and 1-30 parts by weight, respectively, based on the weight of the electrode active material.

Particular examples of the binder that may be used in the present invention include polytertrafluoroethylene (PTFE), polyvinylidene fluoride (PVdF), or the like.

In general the conductive agent that may be used in the present invention includes carbon black. Commercially available conductive agents include acetylene blank-based conductive agents (available from Chevron Chemical Company or Gulf Oil Company), Ketjen Black EC series (available from Armak Company), Vulcan XC-72 (available from Cabot Company) and Super P (available from MMM Co.)

The metal collector includes a metal with high conductivity. Any metal to which the electrode active material slurry can be adhered with ease can be used as long as it shows no reactivity in the drive voltage range of a battery using the same. Typical examples of the collector include mesh, foil, etc., obtained from aluminum, copper, gold, nickel, aluminum alloy or a combination thereof.

Also, there is no particular limitation in methods of applying the slurry onto the collector. For example, the slurry may be applied onto the collector via a doctor blade coating, dip coating or brush coating process. There is no particular limitation in the amount of the slurry applied onto the collector. However, it is preferred that the slurry is applied in such an amount that the active material layer formed after removing a solvent or a dispersant can be in a range of generally 0.005-5mm and preferably 0.05-2mm.

Further, there is no particular limitation in methods of removing the solvent or the dispersant. However, it is preferred that the solvent or the dispersant is allowed to evaporate as quickly as possible, provided that no cracking occurs in the active material layer due to stress concentration and no separation occurs between the active material layer and the collector. For example, the collector coated with the active material slurry may be dried in a vacuum oven at 50-200 °C for 0.5-3 days.

The secondary battery can be manufactured by using the electrode active material of the present invention according to a conventional method known to those skilled in the art. For example, the secondary battery may be obtained by interposing a porous separator between a cathode and an anode to form an electrode assembly, and then by injecting an electrolyte thereto. The secondary battery includes a lithium ion secondary battery, a lithium polymer secondary battery or a lithium ion polymer secondary battery.

The electrolyte may comprise a non-aqueous solvent and an electrolyte salt.

Any non-aqueous solvent currently used for a non-aqueous electrolyte may be used with no particular limitation. Particular examples of such non-aqueous solvents include cyclic carbonates, linear carbonates, lactones, ethers, esters, and/or ketones.

Particular examples of the cyclic carbonates include ethylene carbonate (EC), propylene carbonate (PC), butylene carbonate (BC), or the like. Particular examples of the linear carbonates include diethyl carbonate (DEC), dimethyl carbonate (DMC), dipropyl carbonate (DPC), ethylmethyl carbonate (EMC), methyl propyl carbonate (MPC), or the like. Particular examples of the lactone include gamma-butyrolactone (GBL). Particular examples of the ether include dibutyl ether, tetrahydrofuran, 2-methyltetrahydrofuran, 1,4-dioxane, 1,2-dimethoxyethane, or the like. Additionally, particular examples of the ester include methyl acetate, ethyl acetate, methyl propionate, methyl pivalate, or the like. Further, particular examples of the ketone include polymethylvinyl ketone. Such non-aqueous solvents may be used alone or in combination.

Any electrolyte salt currently used for a non-aqueous electrolyte may be used in the present invention with no particular limitation. Non-limiting examples of the electrolyte salt include a salt represented by the formula of A⁺B⁻, wherein A⁺represents an alkali metal cation selected from the group consisting of Li ⁺, Na⁺, K⁺ and combinations thereof, and B⁻ represents an anion selected from the group consisting of PF₆⁻, BF₄⁻, Cl⁻, Br⁻, I⁻, ClO⁻, ASF₆⁻, CH₃ CO₃⁻ , CF₃ SO₃⁻, N(CF₃SO₂)₂⁻, C(CF₂SO₂)₃⁻ and combinations thereof. A lithium salt is particularly preferred. Such electrolyte salts may be used alone or in combination.

The secondary battery may further comprise a separator. Although there is no particular limitation in the separator that may be used in the present invention, it is preferable to use a porous separator. Non-limiting examples of the separator that may be used include a polypropylene-based, polyethylene-based or polyolefin-based porous separator.

There is no particular limitation in the outer shape of the secondary battery according to the present invention. The secondary battery may be a cylindrical battery using a can, a prismatic battery, a pouch-type battery or a coin-type battery.

Reference will now be made in detail to the preferred embodiments of the present invention. It is to be understood that the following examples are illustrative only and the present invention is not limited thereto.

### Example 1

Si was mixed with natural graphite in a ratio of 50 parts by weight: 50 parts by weight to provide a mixture, and stainless steel balls having a diameter of 3 mm and the mixture were introduced into a Mechano Fusion system available from Hosokawa Micron Co. in a weight ratio of 5:1. Next, the resultant mixture was subjected to mechanical alloying under a ratio of compressive stress/shear stress of 0.5 at a rotation speed of 600 rpm for 30 minutes to provide an electrode active material according to the present invention. FIG. 2 is a photographic view of the electrode active material, taken by TEM. As can be seen from FIG. 2, the electrode active material comprises a core layer, an amorphous carbon layer and a crystalline carbon layer, and the crystalline carbon layer is arranged in parallel with the tangent direction of the core layer.

Then, 100 parts by weight of the electrode active material powder obtained as described above, 10 parts by weight of PVDF as a binder and 10 parts by weight of acetylene black as a conductive agent were mixed, NMP was further added to the above mixture as a solvent, and then the resultant mixture was mixed thoroughly to provide uniform slurry. Next, the slurry was coated onto copper foil with a thickness of 20 µm, followed by drying and rolling. The coated foil was cut into a desired size via punching to provide an electrode.

As an electrolyte; a non-aqueous solvent comprising ethylene carbonate (EC) and ethyl methyl carbonate (EMC) in a ratio of 1 : 2 (v : v) and containing 1M LiPF ₆ dissolved therein was used.

The electrode obtained as described above was used as an anode and lithium metal was used as a counter electrode. Then, a polyolefin-based separator was interposed between both electrodes and the electrolyte was injected thereto to provide a coin-type battery.

### Example 2

A battery was provided in the same manner as described in Example 1, except that Si was mixed with natural graphite in a ratio of 50 parts by weight:50 parts by weight to provide a mixture, zirconia balls having a diameter of 5 mm and the mixture were introduced into a Mechano Fusion system available from Hosokawa Micron Co. in a weight ratio of 10:1, and then the resultant mixture was subjected to mechanical alloying under a ratio of compressive stress/shear stress of 0.5 at a rotation speed of 600 rpm for 30 minutes to provide an electrode active material.

### Comparative Example 1

A battery was provided in the same manner as described in Example 1, except that Si was mixed with natural graphite in a ratio of 50 parts by weight:50 parts by weight to provide a mixture, the mixture was introduced into a Mechano Fusion system available from Hosokawa Micron Co. with no balls, and then the mixture was subjected to mechanical alloying under a ratio of compressive stress/shear stress of 0.2 at a rotation speed of 100 rpm for 30 minutes to provide an electrode active material having a Si core layer, an amorphous carbon layer and a crystalline carbon layer with no directivity.

### Comparative Example 2

A battery was provided in the same manner as described in Example 1, except that Si was mixed with intrinsically amorphous hard carbon in a ratio of 50 parts by weight:50 parts by weight to provide a mixture, stainless steel balls having a diameter of 3 mm and the mixture were introduced into a Mechano Fusion system available from Hosokawa Micron Co. in a weight ratio of 5:1, and then the resultant mixture was subjected to mechanical alloying under a ratio of compressive stress/shear stress of 0.2 at a rotation speed of 600 rpm for 30 minutes to provide an electrode active material having a Si core layer and an amorphous carbon layer.

### Experimental Results

Each of the batteries according to Examples 1 and 2 and Comparative Examples 1 and 2 was subjected to three charge/discharge cycles, and measured for variations in volume. As shown in the following Table 1, the battery according to Example 1 shows a variation in volume of about 51% (33µm → 50µm), while the battery according to Comparative Example 1 shows a variation in volume of about 150% (30µm - 74µm). This indicates that the electrode active material has an effect of inhibiting a volume expansion.

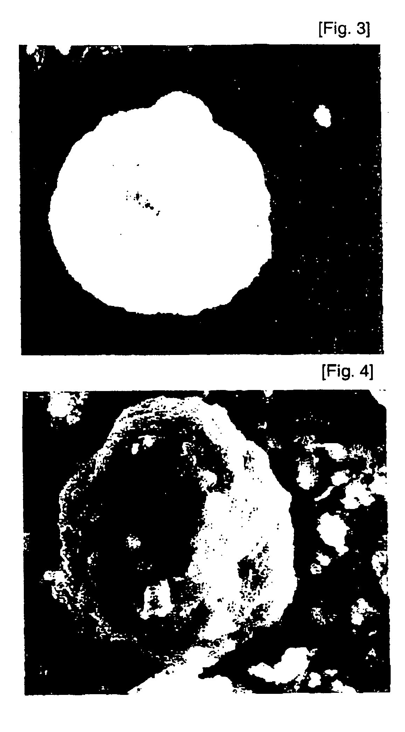

In addition, each of the batteries obtained by using the electrode active materials according to Examples 1 and 2 shows little variation in volume of the core layer after being subjected to charge/discharge cycles. As shown in the following Table 1, each battery maintains the initial capacity to a ratio of 98% or more even after fifty charge/ discharge cycles (see FIGs. 3 and 4). On the contrary, the battery obtained by using the electrode active material according to Comparative Example 1, which comprises a randomly arranged crystalline carbon layer, shows degradation in cycle life characteristics when compared to the battery according to Example 1. Similarly, the battery obtained by using the electrode active material according to Comparative Example 2, which has no crystalline carbon layer, also shows degradation in cycle life characteristics.

**Table 1**

| | Discharge capacity maintenance after 50 cycles (%) | Initial electrode thickness (*µ*m) | Electrode thickness after 3 charge/ discharge cycles(*µ*m) | Electrode expansion ratio(%)(Δt/t) |
|---|---|---|---|---|
| Ex. 1 | 99.3 | 33 | 50 | 51 |
| Ex. 2 | 98.1 | 35 | 56 | 60 |
| Comp. Ex. 1 | 54.6 | 30 | 74 | 150 |
| Comp. Ex. 2 | 12.7 | 26 | 98 | 276 |

### Industrial Applicability

As can be seen from the foregoing, the electrode active material according to the present invention maintains high charge/discharge capacity, as expected from the use of a metal or metalloid-based electrode active material. In addition to this, the electrode active material according to the present inventions can inhibit variations in volume of the core layer that may occur during repeated charge/discharge cycles, since the crystalline carbon layer comprises sheet-like carbon layer units, and the c-axis direction of the sheet-like carbon layer units is perpendicular to the tangent direction of the electrode active material particles. Therefore, the battery using the electrode active material according to the present invention can provide improved cycle life characteristics.

## Claims

1. An electrode active material comprising particles which comprise, successively, a core layer comprising at least one metal or metalloid selected from Si, Al, Sn, Sb, Bi, As, Ge, Pb and an alloy thereof, an amorphous carbon layer and a crystalline carbon layer, wherein the crystalline carbon layer comprises a plurality of sheet-like carbon layer units having a c-axis direction perpendicular to the tangent direction of the core layer.

2. An electrode active material according to Claim 1, wherein the core layer, the amorphous carbon layer and the crystalline carbon layer are present in a ratio of 10-90 parts by weight : 0.1-50 parts by weight: 9.9-90 parts by weight.

3. An electrode active material according to Claim 1 or Claim 2, wherein the crystalline carbon layer has an interlayer spacing (d002) of 0.3354-0.35 nm and a thickness of 1-10 gm.

4. An electrode active material according to any preceding claim, wherein the amorphous carbon layer has an interlayer spacing (d002) of 0.34 nm or more and a thickness of 5 nm or more.

5. A secondary battery comprising an electrode active material as defined in any preceding claim.

6. A method for preparing an electrode active material as defined in any of Claims 1-4, the method comprising a first step of mixing at least one core layer-forming metal or metalloid selected from Si, Al, Sn, Sb, Bi, As, Ge, Pb and an alloy thereof with crystalline carbon, and a second step of carrying out mechanical alloying of the mixture obtained in the first step in a Mechano Fusion system in the presence of balls, wherein the mechanical alloying is performed at a compressive stress to sheer stress ratio of 0.5:1 or more.

7. A method according to Claim 6, wherein the metal or metalloid and the crystalline carbon are mixed in the first step in a ratio of 10-90 parts by weight: 10-90 parts by weight.

8. A method according to Claim 6 or Claim 7, wherein the balls and the mixture obtained in the first step are mixed in the second step in a ratio of 50-98 parts by weight : 2-50 parts by weight.

9. A method according to any of Claims 6-8, wherein the balls used in the second step include stainless steel balls or zirconia balls.

10. A method according to any of Claims 6-9, wherein the balls used in the second step have a diameter of 0.1-10 mm.

## Patentansprüche

1. Elektrodenaktivmaterial, umfassend Teilchen, die nacheinander eine Kernschicht mit mindestens einem Metall oder Metalloid, ausgewählt aus Si, Al, Sn, Sb, Bi, As, Ge, Pb und einer Legierung davon, eine amorphe Kohlenstoffschicht und eine kristalline Kohlenstoffschicht umfassen, wobei die kristalline Kohlenstoffschicht eine Vielzahl von blattartigen Kohlenstoffschichteinheiten mit einer c-Achsenrichtung senkrecht zu der Tangentenrichtung der Kernschicht umfasst.

2. Elektrodenaktivmaterial gemäß Anspruch 1, wobei die Kernschicht, die amorphe Kohlenstoffschicht und die kristalline Kohlenstoffschicht in einem Verhältnis von 10 bis 90 Gew.-Teile : 0,1 bis 50 Gew.-Teile : 9,9 bis 90 Gew.-Teile vorhanden sind.

3. Elektrodenaktivmaterial gemäß Anspruch 1 oder Anspruch-, 2, wobei die kristalline Kohlenstoffschicht einen Zwischenschichtabstand (d002) von 0,3354 bis 0,35 nm und eine Dicke von 1 bis 10 µm hat.

4. Elektrodenaktivmaterial gemäß einem der vorangehenden Ansprüche, wobei die amorphe Kohlenstoffschicht einen Zwischenschichtabstand (d002) von 0,34 nm oder mehr und eine Dicke von 5 nm oder mehr hat.

5. Sekundärbatterie, die ein Elektrodenaktivmaterial, wie in einem der vorangehenden Ansprüche definiert, umfasst.

6. Verfahren zur Herstellung eines Elektrodenaktivmaterials, wie in einem der Ansprüche 1 bis 4 definiert, wobei das Verfahren einen ersten Schritt, in dem zumindest ein die Kernschicht bildendes Metall oder Metalloid, ausgewählt aus Si, Al, Sn, Sb, Bi, As, Ge, Pb und einer Legierung davon, mit kristallinem Kohlenstoff gemischt wird, und einen zweiten Schritt, in dem ein mechanisches Legieren der in dem ersten Schritt erhaltenen Mischung in einem Mechano-Fusions-System in Gegenwart von Kugeln ausgeführt wird, umfasst, wobei das mechanische Legieren bei einem Verhältnis von Druckspannung zu Scherspannung von 0,5:1 oder mehr durchgeführt wird.

7. Verfahren gemäß Anspruch 6, wobei das Metall oder Metalloid und der kristalline Kohlenstoff in dem ersten Schritt in einem Verhältnis von 10 bis 90 Gew.-Teile : 10 bis 90 Gew.-Teile gemischt werden.

8. Verfahren gemäß Anspruch 6 oder Anspruch 7, wobei die Kugeln und die in dem ersten Schritt erhaltene Mischung in dem zweiten Schritt in einem Verhältnis von 50 bis 98 Gew.-Teile : 2 bis 50 Gew.-Teile gemischt werden.

9. Verfahren gemäß einem der Ansprüche 6 bis 8, wobei die in dem zweiten Schritt verwendeten Kugeln rostfreie Stahlkugeln oder Zirkonoxidkugeln umfassen.

10. Verfahren gemäß einem der Ansprüche 6 bis 9, wobei die in dem zweiten Schritt verwendeten Kugeln einen Durchmesser von 0,1 bis 10 mm haben.

## Revendications

1. Matériau actif d'électrode comprenant des particules qui comprennent, successivement, une couche centrale comprenant au moins un métal ou un métalloïde choisi parmi Si, Al, Sn, Sb, Bi, As, Ge, Pb et un alliage de ceux-ci, une couche de carbone amorphe et une couche de carbone cristallin, où la couche de carbone cristallin comprend une pluralité d'unités de couche de carbone en feuille ayant une direction d'axe c perpendiculaire à la direction tangente de la couche centrale.

2. Matériau actif d'électrode selon la revendication 1, dans lequel la couche centrale, la couche de carbone amorphe et la couche de carbone cristallin sont présentes dans un rapport de 10-90 parties en poids : 0,1-50 parties en poids : 9,9-90 parties en poids.

3. Matériau actif d'électrode selon la revendication 1 ou 2, dans lequel la couche de carbone cristallin présente un espacement inter-couches (d002) de 0,3354-0,35 nm et une épaisseur de 1-10 µm.

4. Matériau actif d'électrode selon l'une des revendications précédentes, dans lequel la couche de carbone amorphe présente un espacement inter-couches (d002) de 0,34 nm ou plus et une épaisseur de 5 nm ou plus.

5. Batterie secondaire comprenant un matériau actif d'électrode tel que défini dans l'une des revendications précédentes.

6. Procédé de préparation d'un matériau actif d'électrode tel que défini dans l'une des revendications 1-4, le procédé comprenant une première étape consistant à mélanger au moins un métalloïde ou un métal formant une couche centrale choisi parmi Si, Al, Sn, Sb, Bi, As, Ge, Pb et un alliage de ceux-ci avec du carbone cristallin, et une deuxième étape consistant à réaliser un alliage mécanique du mélange obtenu dans la première étape dans un système de Fusion Mécanique en présence de billes, dans lequel l'alliage mécanique est réalisé à une contrainte de compression pour cisailler le rapport des contraintes de 0,5 : 1 ou plus.

7. Procédé selon la revendication 6, dans lequel le métal ou le métalloïde et le carbone cristallin sont mélangés dans la première étape dans un rapport de 10-90 parties en poids : 10-90 parties en poids.

8. Procédé selon la revendication 6 ou 7, dans lequel les billes et le mélange obtenus dans la première étape sont mélangés dans la deuxième étape dans un rapport de 50-98 parties en poids : 2-50 parties en poids.

9. Procédé selon l'une des revendications 6-8, dans lequel les billes utilisées dans la deuxième étape comportent des billes en acier inoxydable ou des billes de zircone.

10. Procédé selon l'une des revendications 6-9, dans lequel les billes utilisées dans la deuxième étape ont un diamètre de 0,1-10 mm.
